# EUROPEAN PATENT SPECIFICATION

(11) **EP 3 133 469 B1**
(45) Date of publication and mention of the grant of the patent: **13.11.2019**
(21) Application number: 16184024.4
(22) Date of filing: 12.08.2016
(51) Int. Cl.: G06F 3/01, B64D 45/08, G06F 3/03, B64D 45/00, B64D 13/06, B64D 43/00, B64D 47/08, G01C 23/00, G05D 1/10

(54) **SYSTEM AND METHOD FOR DIGITIZATION OF VEHICULAR COMPONENTS**
SYSTEM UND VERFAHREN ZUR DIGITALISIERUNG VON FAHRZEUGKOMPONENTEN
SYSTÈME ET PROCÉDÉ DE NUMÉRISATION DE COMPOSANTS DE VÉHICULE

(30) Priority: 18.08.2015 US 201562206540 P
(43) Date of publication of application: 22.02.2017
(73) Proprietor: Sikorsky Aircraft Corporation, Stratford, CT 06615 (US)
(72) Inventor: CHEREPINSKY, Igor, Sandy Hook, CT Connecticut 06482 (US)
(74) Representative: Schmitt-Nilson Schraud Waibel Wohlfrom Patentanwälte Partnerschaft mbB

(56) References cited:
- EP-A1- 1 947 548
- US-A1- 2009 158 220
- US-A1- 2013 261 871

## Description

### BACKGROUND

In a variety of legacy air and ground vehicles, there are numerous human-machine interfaces ("HMI") components such as levers, dials, gauges, and switches. While many times still functional if maintained, these aging vehicles are operating in the field with older analog existing HMI components that are not automated and unable to use high bandwidth data and/or network data. Attempts have been made to automate such legacy vehicles such as by replacing the older analog legacy HMI components with ones that are capable of both high bandwidth data and/or network data. Alternatively, electro-mechanical transducers can be attached to each HMI component, such that the output of the transducers can be read into a computer system. For legacy analog cockpits, retrofitting the aircraft with sophisticated autopilots or autonomous systems can be very expensive and the aircraft can incur a significant weight penalty. In many cases, the legacy HMI components are pneumatic or hydraulic, and there is no simple way to interface with electronic systems, thus requiring a retrofit with electronic sensors and additional wiring. The time it takes to retrofit the legacy cockpit additionally requires the vehicle to be taken out of service for an extended period of time.

Accordingly, there exists a need in the art for simplifying the digitization of HMI components in a cockpit of a legacy vehicle.

EP 1 947 548 A1 discloses a vehicular actuation system which is installed in a vehicle comprising an actuation device (such as lights of the vehicle and air-conditioner, door mirrors or a car navigation system) to be actuated when an operation member (such as switches, buttons) is operated by a vehicle occupant, a detecting unit for detecting a three-dimensional image in an operational area of a predetermined range about the operation member, and a control unit which determines based on the three-dimensional image detected by the detecting unit whether or not a palm or a back of hand of the vehicle occupant exists in the operational area. The actuation system has a first operation mode in which the operation member is directly operated by the palm or back of hand to actuate the actuation device and a second operation mode in which the actuation device is actuated by non-contact operation of the operation member according to the control of the control unit.

US 2013/261871 A1 describes gesture-based automotive controls based on three-dimensional images. For example, as described in paras. [0049-0053], the vehicle may select, based on a detected downward swiping gesture in a region that includes an air-conditioning vent, a function associated with the downward swiping gesture in a region that includes the air-conditioning vent.

The invention relates to a system for digitizing components of a vehicle and a method of digitizing components of a vehicle according to the appended claims

### BRIEF DESCRIPTION

A system for digitizing components of a vehicle is specified in claim 1. The corresponding method is specified in claim 12. Advantageous embodiments are defined in the dependent claims.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a perspective view of an embodiment of a rotary wing aircraft vehicle;
FIG. 2 is a perspective view of an embodiment of a portion of a cockpit and a system for digitizing HMI components for the vehicle of FIG. 1;
FIG. 3 is a perspective view of another embodiment of a portion of a cockpit and a system for digitizing HMI components for the vehicle of FIG. 1;
FIG. 4 is a perspective view of still another embodiment of a portion of a cockpit and a system for digitizing HMI components for the vehicle of FIG. 1;
FIG. 5 is a partly sectional and partly diagrammatic view of an embodiment of a system for digitizing an HMI component; and,
FIG. 6 is a block diagram of a system for digitizing HMI components in the vehicle of FIG. 1.

### DETAILED DESCRIPTION

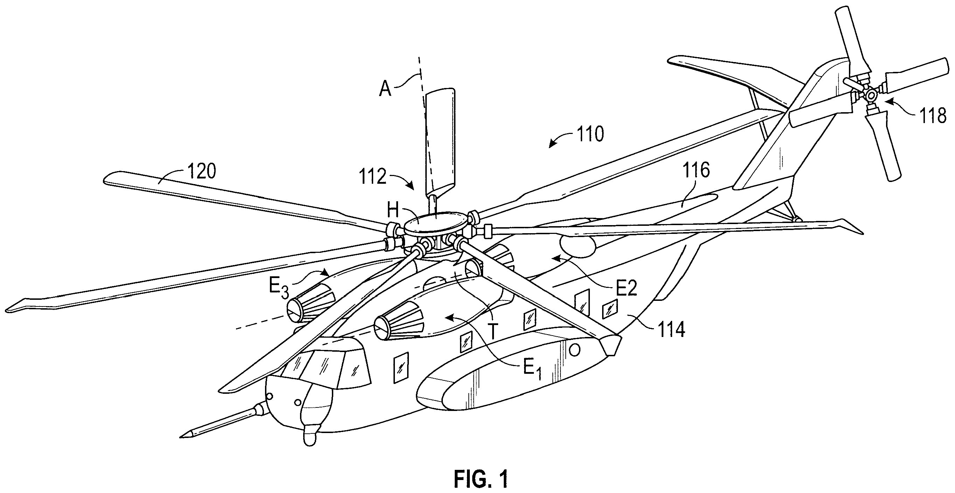

FIG. 1 schematically illustrates an embodiment of a vehicle 110, such as a rotary wing aircraft having a main rotor assembly 112. The vehicle 110 includes an airframe 114 having an extended tail 116 which mounts a tail rotor system 118, such as an anti-torque system, a translational thrust system, a pusher propeller, a rotor propulsion system, and the like. The main rotor assembly 112 includes a plurality of rotor blade assemblies 120 mounted to a rotor hub H. The main rotor assembly 112 is driven about an axis of rotation A through a main gearbox (illustrated schematically at T) by one or more engines E, such as, by example only, E₁, E₂, and E₃. Although a particular helicopter configuration is illustrated and described in the disclosed embodiment as the vehicle 110, other vehicles, configurations, equipment, and/or machines, such as high speed compound rotary wing aircrafts with supplemental translational thrust systems, dual contra-rotating, coaxial rotor system aircrafts, tilt-rotors and tilt-wing aircrafts, and fixed wing aircrafts, as well as land and other legacy equipment and vehicles having legacy analog HMI components, will also benefit from embodiments of the invention.

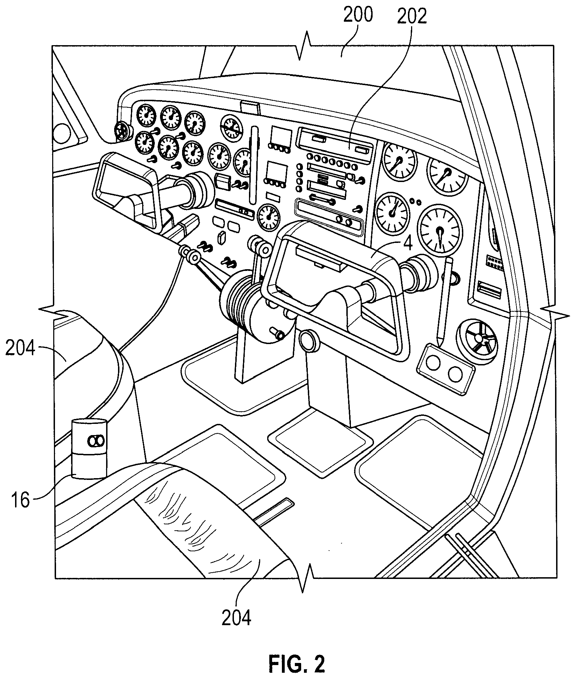

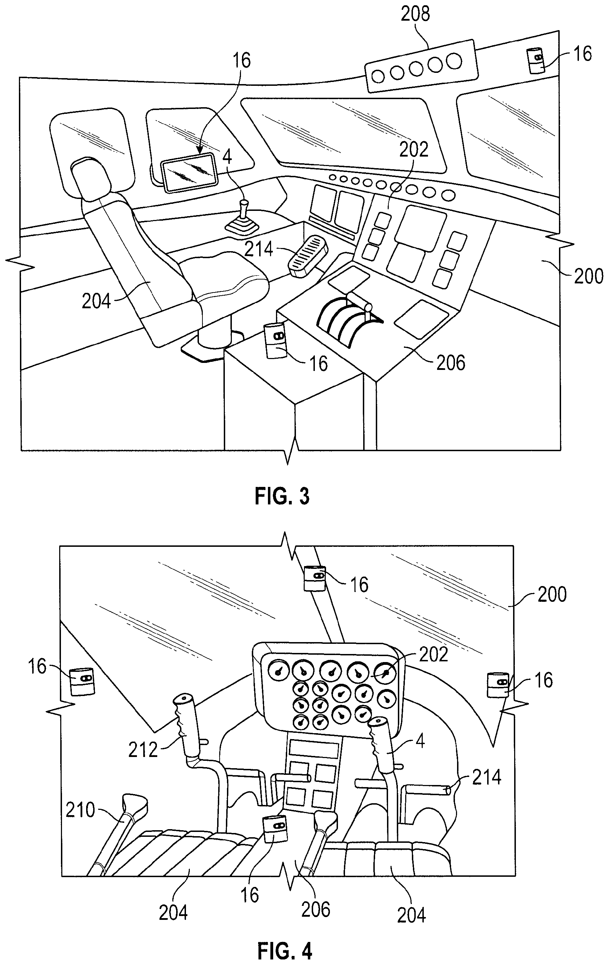

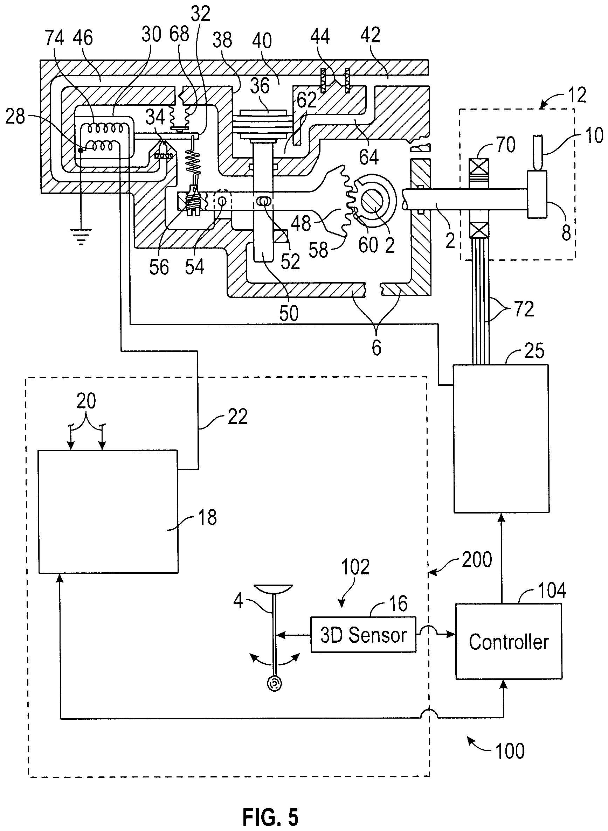

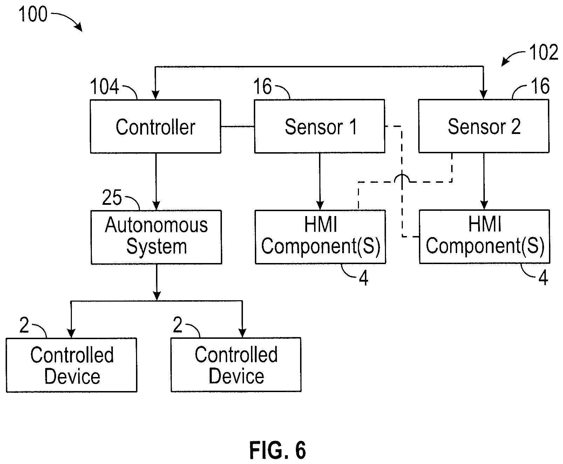

Within the vehicle 110 is a cockpit 200 reserved for the pilots or other operators of the vehicle 110. Various embodiments of a cockpit 200 are depicted in FIGS. 2-4. The cockpit 200 contains a plurality of HMI components 4 (such as, but not limited to, components 4 for controlling controlled devices 2, as illustrated in FIGS. 5 and 6, for actuating control surfaces, lift-increasing flaps and the like, controls for actuating the landing gear, the engines, the air-brakes, switches, needles, gauges, etc.) and any other instruments necessary for operating, piloting, and/or driving the vehicle 110. The HMI components 4 may include, but are not limited to, a collective lever 210, cyclic stick 212, directional control pedals 214 (FIG. 4), as well as a throttle, switch, handle, wheel, lever, dial, pedal, and any other operator engageable component 4. The cockpit 200 further includes at least one seat 204 for the operator. The seat 204, or multiple seats 204, are situated within the cockpit 200 so that at least a subset of the HMI components 4 are reachable by and/or within visualization distance of the operator. A first set of components 4 may be positioned on an instrument panel 202 forward of the seat 204. A second set of components may be positioned on a side of the seat 204, such as on a center console 206 (FIGS. 3 and 4) between two adjacent seats 204 in the cockpit 200, and a third set of components may be positioned on a ceiling of the cockpit 200, such as on an overhead console 208 (FIG. 3). Additional components 4 or sets of components 4 may be arranged at alternate locations within the cockpit 200 to allow for easy access and/or visualization by the operator. When at least one of the components 4 is an analog device not initially digitized (contains no transducers that sense displacement of the components 4 to send signals therefrom, or any other A/D converter), the location, placement, and/or status of the component 4 is not (without the system described herein) known to a computer controller and therefore not otherwise configured to operate with an autopilot / autonomous system. It should be noted, however, that even components 4 already having an A/D converter may still be digitized using the system described herein, thus providing a redundancy that further ensures accuracy. A mechanical system for connecting the components 4 to their respective controlled devices 2 may suffer from linkage backlash, temperature effects, and vehicle structure deflections. However, a retrofit with transducers, electronic sensors, and additional wiring for each HMI component 4 is time consuming, expensive, and comes with weight penalties.

Thus, as additionally shown in FIGS. 5 and 6, a system 100 for digitizing the HMI components 4 includes a sensing system 102 including at least one sensing device 16. The sensing device 16 may include one or more of a 3D camera, lidar, radar, and any other state of the art sensing system capable of picking up on the depth, position, and characteristics of HMI components 4 as well as operator interaction with the HMI components 4 and converting the HMI components 4 that are sensed by the sensing device 16 to a digital output. That is, while image-capturing devices 16 are illustrated, the sensing system 102 may include any other state of the art sensing devices 16 that can detect the positioning of the HMI components 4. Lidar, for example, is a remote sensing technology that measures distance by illuminating a target with a laser and analyzing the reflected light, known for use in long range applications such as mapping and obstacle detection and avoidance exterior of a unit. Lidar systems include a laser, scanner and optics, photodetector and receiver electronics, and position and navigation systems. The selected sensing devices 16, or combination of sensing devices 16, include relatively low power, eye safe sensing devices 16 that can accurately digitize positions of each HMI component 4, and read gauge dials. The sensing device 16 may be positioned in the cockpit 200 in such a way as to provide full coverage of all the HMI components 4, or a subset of the HMI components 4. A plurality of devices 16 (such as shown in FIGS. 3 and 4) may further be used to provide redundancy and coverage overlap to ensure that failure of a single sensing device 16 does not result in information loss. The positioning of the devices 16 may further be chosen so as not to interfere with expected operator seating positions within seats 204, so as to eliminate the possibility of operator interference between the sensing device 16 and the HMI components 4 and to facilitate detection of operator interaction with the HMI components 4. Various positions of the sensing devices 16 in the cockpit 200 are illustrated in FIGS. 2-4, but not restricted thereto. The sensing devices 16 are installed in the cockpit 200 and aimed towards at least a subset of the desired HMI components 4. Sensed data, including but not limited to sensed images, from the sensing devices 16 may be streamed continuously or captured periodically.

Turning now to FIG. 5, one embodiment of an HMI component 4 for operating a controlled device 2 is depicted. In the illustrated embodiment, the HMI component 4 is a throttle and the controlled device 2 is a fuel control shaft, however it should be understood that any HMI component 4 within a cockpit 200 might be digitized using the system 100 described herein, and accordingly any controlled device directed by the HMI component 4 may be utilized. Thus, the following details of the controlled device 2 are provided as only one example of a controlled device 2 that is directed by an HMI component 4 and not meant to be limiting in any way as to the type of HMI components 4 that can be digitized or the types of controlled devices 2 that are directed by their respective HMI components. In the illustrated embodiment of FIG. 5, an actuator 6 is arranged to cause a predetermined turning movement of the controlled device 2 (fuel control shaft) when the HMI component 4 (cockpit throttle) is moved through a predetermined angle. The controlled device 2 (shaft) is shown in two positions in the drawing, one position being at right angles to the other and, to emphasize this, the box for the actuator 6 is shown as broken away in the area in which the controlled device 2 (shaft) is journaled.

The controlled device 2 (shaft) may carry a cam 8 that engages a follower 10 forming part of the computer mechanism of the fuel control, this mechanism serving to control the fuel quantity based on the angular position of the cam. The fuel control is represented by the box 12 and may be any of several known controls. In the illustrated embodiment, the fuel control has the projecting controlled device 2 (shaft), which for controlling fuel supply to the engine is turned in proportion to the movement of the HMI component 4 (throttle).

In prior systems, transducers are placed in juxtaposition to the HMI component 4 (throttle) and connected thereto so that proportional displacement of the transducers by displacement of the HMI component 4 (throttle) will result in two signals, one from each transducer, which are sent to a box 18 which utilizes vehicle D.C. power represented by the leads 20 to produce two equal amplified signals, also proportionate to throttle movement. However, as noted above, installation of such transducers for each HMI component 4 is time consuming, expensive, and comes with a weight penalty. Thus, the system 100 instead includes a sensing system 102 including the sensing device 16, such as one or more image capturing devices, which may be easily retrofitted in the cockpit 200. The sensed image of the HMI component 4 and its particular orientation are sent to a controller 104 including a processor, memory, and may further include a database. The processor within the controller 104 may execute one or more instructions that may cause the system 100 to take one or more actions, such as digitizing the sensed data (including sensed images) from the sensing devices 16 and comparing the digitized data with other data stored in the database within the controller 104, or utilizing the digitized data in algorithms stored in the database. By comparing the digitized data with other data or utilizing the digitized data in algorithms, a signal indicative of the condition of the HMI component 4 may be sent for appropriate follow-up action or actions to be accomplished by one or more of the controlled devices 2. After determining appropriate follow-up action or actions, the processor may further execute instructions to send appropriate response signals to a controller of the actuator 6 for responding to the sensed and digitized data from the HMI component 4. The instructions may be stored in the memory.

Data stored in the database may be based on data received from the sensing device(s) 16. In some embodiments, the data stored in the database may be based on one or more algorithms or processes. For example, in some embodiments data stored in the database may be a result of the processor having subjected data received from the sensing device(s) 16 to one or more filtration processes. The database may be used for any number of reasons. For example, the database may be used to temporarily or permanently store data, to provide a record or log of the data stored therein for subsequent examination or analysis, etc. In some embodiments, the database may store a relationship between data such as one or more links between data or sets of data. The controller 104 provides the sensed and processed signal to an autonomy system or supervisory control 25.

In one embodiment, the controller 104 may only provide the sensed and processed signal to the supervisory control 25. In another embodiment, for redundancy, the controller 104 may additionally provide the sensed and processed signal to the box 18, which in turn conducts a signal by lead 22 to the actuator 6 (such as the illustrated electrohydraulic actuator). Whether or not redundant signals are sent, the embodiments disclosed in FIGS. 5 and 6 do not require any mechanical connections between the HMI component 4 and the actuator 6 or the supervisory control 25.

While a particular actuator 6 will be described for the controlled device 2, it should be understood that actuators 6 will be designed differently for each controlled device 2, and thus the particular embodiment described herein is merely illustrative of one possible embodiment of an actuator 6 for one embodiment of a controlled device 2. For example, the controlled device 2 could instead be a light, in which case the condition of the light from on to off, or levels therebetween, would be controlled in an entirely different fashion than the actuator 6 for a fuel shaft.

In one embodiment of an actuator 6 for a fuel shaft, as shown in Figure 5, the signal from box 18 to the actuator 6 energizes one coil 28 of a torque motor 30. This results in an unbalance on the torque motor arm 32, displacing it toward or away from a nozzle 34 depending on the direction of movement of the HMI component 4 (throttle), as monitored by the sensing device 16. The change in nozzle area produces an unbalance on a hydraulic piston 36 in a cylinder 38. The space 40 above the piston 36 in the cylinder 38 is supplied by fluid through a passage 42 having a fixed constriction 44 therein. The nozzle 34 is also connected to the space 40 by a passage 46.

As the arm 32 moves relative to the nozzle 34, the resulting change in the rate of flow to or from the space 40 above the piston 36 produces a hydraulic unbalance on the piston 36 resulting in piston displacement and a corresponding movement of the lever 48 to which the piston rod 50 is connected as by a pin 52. This lever 48 is pivoted on a fixed pin 54, and the end of the lever 48 is connected by a feedback spring 56 to the end of the torque motor arm 32. As the piston 36 is moved with a resulting movement of the lever 48, the changing load on the spring 56 restores the force balance on the torque motor arm 32 and thus the piston displacement is proportional to the signal to the torque motor 30 and thus proportional to throttle movement. The displacement of the piston 36 is transmitted to the fuel control shaft (controlled device 2) by a gear segment 58 on the end of the lever 48 remote from the spring 56. This segment engages a gear 60 on the fuel control shaft (controlled device 2). The result is angular movement of the shaft proportional to throttle lever movement. The space 62 beneath piston 36 is connected to the fluid passage 42 upstream of the constriction 44 by a passage 64. This space 62 is thus supplied by the constant pressure source for passage 42. In the absence of friction, gear backlash, tolerances, and the like, the actual control shaft position is accurately maintained relative to the desired position.

The signal from the controller 104 to the supervisory control 25 may serve to trim actual control shaft position for errors introduced by sources such as those above mentioned, or may be used to instruct the control 25 on the intended condition input by the HMI component 4. Actual shaft position may be transmitted by a signal from a resolver transducer 70 surrounding the shaft (controlled device 2), by leads 72 to the supervisory control 25 where it is compared to the throttle transducer signal from the controller 104. Any error between the signals may be used to generate a proportional signal to a second torque motor coil 74, producing a force unbalance on the torque motor arm 32 until the shaft position error is reduced effectively to zero. In order to enhance the performance of this system, bellows 68, connected to passage 46, may be positioned to engage the torque motor arm 32 or nozzle flapper to provide a negative spring rate for the nozzle flapper displacement system. The bellows 68 is sized to reduce the total system spring rate approximately to zero for steady state conditions. This serves to reduce the error in the signal to the torque motor 30 required to overcome friction in the system.

In one embodiment, the HMI components 4 may be altered to remove the direct or physical connections between one or more of the components 4 and their respective actuatable devices. For example, if a throttle position lever is to be digitized, the underlying cable may be removed. The system 100 will digitize the position of the component 4 and command the actuator 6 to the digitized condition, which will in turn have the desired affect on the controlled device 2, whether that be to turn from on to off, rotate a certain number of degrees, release or engage a device, etc.

The digital output of the HMI components 4 is used to recognize position or status of the components 4. A processing element in the controller 104 receives data from the sensing device 16 in real time and digitizes the components 4. An algorithm for the system 100 recognizes positions/status of the components 4 and forwards the information to an supervisory control 25 for actuation of the controlled device 2. As shown in FIG. 6, a plurality of sensing devices 16 may be employed. Also, each sensing device 16 may sense the movement of one or more HMI components 4. Further, there may be overlap in the sensing devices 16 with respect to the HMI components 4 to provide redundancy and ensure that each HMI component 4 is monitored.

Thus, the system 100 provides a simple, cost effective way to digitize cockpit HMI components 4, including any sort of controls and displays, while providing sufficient reliability. Because putting an analog-to-digital converter on every component 4 is expensive, time-consuming, and comes with a weight penalty, the method described herein senses the components 4, such as, but not limited to taking images of the components 4 using the sensing device(s) 16, and uses the sensed data to assign a digital value that corresponds to a directed condition of the controlled device 2. The sensed positions of the controls, switches, gauges, and other components 4 taken by the sensing system 102 will be processed by the controller 104 so as to digitize the positions of the components 4 so that the controlled device 2 does not need to be mechanically linked to the components 4, nor does each individual component 4 require a separate A/D converter. After the system 100 is installed, it is further possible to remove legacy wiring from the components 4, while retaining the original components for HMI use. That is, if the system 100 is fully automated, then only the position of the components 4 as directed by the operator is necessary, and not the actual result (e.g. control of flaps, landing gear, lights, etc.) of the repositioning of the components 4. In other words, the components 4 and the devices 2 that they control do not need to be directly linked, and movement of the components 4 will be digitized and sent to an autonomy system 25 (including flight control computer, vehicle management computer, etc.) for subsequent control of the controlled devices 2. With no particular hard-wiring required between the devices 2 and the components 4, weight reduction of the vehicle 110 can be realized.

The system 100 may also be used for optionally piloted vehicles 110, as it allows both modes of operation - manned and unmanned. The system 100 may further enable a reduction of operators required for a particular manned vehicle 110.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which fall within the scope of the appended claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system for digitizing components of a vehicle (110), the system comprising:
a 3-dimensional sensing system (102) operatively arranged to monitor a human-machine interface component (4) including an operator engageable component of the vehicle, the operator engageable component for controlling a controlled device (2) of the vehicle, the 3-dimensional sensing system (102) including at least one remote sensing device (16) capable of detecting a position or status of the human-machine interface component (4); and
a controller (104) arranged to receive sensed data from the 3-dimensional sensing system (102);
wherein the controller (104) processes the sensed data to assign a digital value that is used to recognize the position or status of the human-machine interface component (4) and corresponds to a directed condition of the controlled device (2) and outputs a signal indicative of a condition of the human-machine interface component (4), the controlled device (2) controlled by the condition of the human-machine interface component (4).

2. The system of claim 1, wherein the 3-dimensional sensing system (102) includes an image-capturing device (16) and the sensed data includes sensed images.

3. The system of claims 1 or 2, wherein the 3-dimensional sensing system (102) is operatively arranged to monitor a plurality of human-machine interface components (4).

4. The system of claim 3, wherein the 3-dimensional sensing system (102) includes a plurality of 3-dimensional sensing devices (16), each 3-dimensional sensing device (16) operatively arranged to monitor a plurality of human-machine interface components (4).

5. The system of claim 4, wherein at least a subset of the plurality of human-machine interface components (4) are monitored by two or more of the plurality of 3-dimensional sensing devices (16).

6. The system of any of the preceding claims, wherein the 3-dimensional sensing system (102) includes one of a lidar system, a 3D camera, and radar.

7. The system of any of the preceding claims, wherein the vehicle (110) is an aircraft and the human-machine interface component (4) and the 3-dimensional sensing system (102) are located in a cockpit of the aircraft.

8. The system of any of the preceding claims, wherein the human-machine interface component (4) is at least one of a collective lever, a cyclic stick, and a throttle.

9. The system of any of the preceding claims, wherein the human-machine interface component (4) is located on an instrument panel of the aircraft.

10. The system of any of the preceding claims, further comprising an actuator (6) to actuate the controlled device (2), wherein the actuator is actuatable in response to the signal from the controller (104).

11. The system of claim 10, further comprising a supervisory control (25), wherein the supervisory control is arranged to receive the signal from the controller (104), and arranged to direct actuation of the controlled device (2) through the actuator (6).

12. A method of digitizing components of a vehicle (110), the method comprising:
arranging a 3-dimensional sensing system (102) to monitor a human-machine interface component (4) including an operator engageable component of the vehicle, the operator engageable component for controlling a controlled device (2) of the vehicle, the 3-dimensional sensing system (102) including at least one remote sensing device (16) capable of detecting a position or status of the human-machine interface component (4);
sending sensed data representative of an area including the human-machine interface component (4) from the 3-dimensional sensing system (102) to a controller (104);
processing the sensed data in the controller (104) to assign a digital value that is used to recognize the position or status of the human-machine interface component (4) and corresponds to a directed condition of the controlled device (2);
outputting a signal indicative of a condition of the human-machine interface component (4); and
actuating the controlled device (2) in response to the signal from the controller (104).

13. The method of claim 12, wherein the 3-dimensional sensing system (102) includes at least one of a lidar system, 3D camera, and radar.

14. The method of claim 12 or 13, wherein the vehicle (110) is an aircraft and the human-machine interface component (4) and the 3-dimensional sensing system (102) are located in a cockpit of the aircraft.

## Patentansprüche

1. System zur Digitalisierung von Komponenten eines Fahrzeugs (110), wobei das System Folgendes umfasst:
ein 3-dimensionales Erfassungssystem (102), das wirkangeordnet ist, um eine Mensch-Maschine-Schnittstellenkomponente (4), die eine von einem Bediener in Eingriff bringbare Komponente des Fahrzeugs beinhaltet, zu überwachen, wobei die von einem Bediener in Eingriff bringbare Komponente dazu dient, eine gesteuerte Vorrichtung (2) des Fahrzeugs zu steuern, wobei das 3-dimensionale Erfassungssystem (102) zumindest eine Fernerfassungsvorrichtung (16) beinhaltet, die dazu in der Lage ist, eine Position oder einen Status der Mensch-Maschine-Schnittstellenkomponente (4) zu erfassen; und
eine Steuerung (104), die angeordnet ist, um erfasste Daten von dem 3-dimensionalen Erfassungssystem (102) zu empfangen;
wobei die Steuerung (104) die erfassten Daten verarbeitet, um einen digitalen Wert zuzuweisen, der verwendet wird, um die Position oder den Status der Mensch-Maschine-Schnittstellenkomponente (4) zu erkennen und einem gerichteten Zustand der gesteuerten Vorrichtung (2) entspricht und ein Signal ausgibt, das einen Zustand der Mensch-Maschine-Schnittstellenkomponente (4) angibt, wobei die gesteuerte Vorrichtung (2) durch den Zustand der Mensch-Maschine-Schnittstellenkomponente (4) gesteuert wird.

2. System nach Anspruch 1, wobei das 3-dimensionale Erfassungssystem (102) eine Bilderfassungsvorrichtung (16) beinhaltet und die erfassten Daten erfasste Bilder beinhalten.

3. System nach Anspruch 1 oder 2, wobei das 3-dimensionale Erfassungssystem (102) wirkangeordnet ist, um eine Vielzahl von Mensch-Maschine-Schnittstellenkomponenten (4) zu überwachen.

4. System nach Anspruch 3, wobei das 3-dimensionale Erfassungssystem (102) eine Vielzahl von 3-dimensionalen Erfassungsvorrichtungen (16) beinhaltet, wobei jede 3-dimensionale Erfassungsvorrichtung (16) wirkangeordnet ist, um eine Vielzahl von Mensch-Maschine-Schnittstellenkomponenten (4) zu überwachen.

5. System nach Anspruch 4, wobei zumindest ein Teilsatz aus der Vielzahl von Mensch-Maschine-Schnittstellenkomponenten (4) durch zwei oder mehr aus der Vielzahl von 3-dimensionalen Erfassungsvorrichtungen (16) überwacht wird.

6. System nach einem der vorhergehenden Ansprüche, wobei das 3-dimensionale Erfassungssystem (102) eines von einem Lidar-System, einer 3D-Kamera und Radar beinhaltet.

7. System nach einem der vorhergehenden Ansprüche, wobei das Fahrzeug (110) ein Luftfahrzeug ist und sich die Mensch-Maschine-Schnittstellenkomponente (4) und das 3-dimensionale Erfassungssystem (102) in einem Cockpit des Luftfahrzeugs befinden.

8. System nach einem der vorhergehenden Ansprüche, wobei die Mensch-Maschine-Schnittstellenkomponente (4) zumindest eines von einem Kollektivhebel, einem zyklischen Steuerhebel und einer Drossel ist.

9. System nach einem der vorhergehenden Ansprüche, wobei sich die Mensch-Maschine-Schnittstellenkomponente (4) an einem Armaturenbrett des Luftfahrzeugs befindet.

10. System nach einem der vorhergehenden Ansprüche, ferner umfassend einen Aktor (6) zum Betätigen der gesteuerten Vorrichtung (2), wobei der Aktor als Reaktion auf das Signal von der Steuerung (104) betätigbar ist.

11. System nach Anspruch 10, ferner umfassend eine Überwachungssteuerung (25), wobei die Überwachungssteuerung angeordnet ist, um das Signal von der Steuerung (104) zu empfangen, und angeordnet ist, um Betätigung der gesteuerten Vorrichtung (2) durch den Aktor (6) zu lenken.

12. Verfahren zur Digitalisierung von Komponenten eines Fahrzeugs (110), wobei das Verfahren Folgendes umfasst:
Anordnen eines 3-dimensionalen Erfassungssystems (102), um eine Mensch-Maschine-Schnittstellenkomponente (4) zu überwachen, die eine von einem Bediener in Eingriff bringbare Komponente des Fahrzeugs beinhaltet, wobei die von einem Bediener in Eingriff bringbare Komponente dazu dient, eine gesteuerte Vorrichtung (2) des Fahrzeugs zu steuern, wobei das 3-dimensionale Erfassungssystem (102) zumindest eine Fernerfassungsvorrichtung (16) beinhaltet, die dazu in der Lage ist, eine Position oder einen Status der Mensch-Maschine-Schnittstellenkomponente (4) zu erfassen;
Senden von erfassten Daten, die einen Bereich angeben, der die Mensch-Maschine-Schnittstellenkomponente (4) beinhaltet, von dem 3-dimensionalen Erfassungssystem (102) an eine Steuerung (104);
Verarbeiten der erfassten Daten in der Steuerung (104), um einen digitalen Wert zuzuweisen, der verwendet wird, um die Position oder den Status der Mensch-Maschine-Schnittstellenkomponente (4) zu erkennen und einem gerichteten Zustand der gesteuerten Vorrichtung (2) entspricht;
Ausgeben eines Signals, das einen Zustand der Mensch-Maschine-Schnittstellenkomponente (4) angibt; und
Betätigen der gesteuerten Vorrichtung (2) als Reaktion auf das Signal von der Steuerung (104).

13. Verfahren nach Anspruch 12, wobei das 3-dimensionale Erfassungssystem (102) eines von einem Lidar-System, einer 3D-Kamera und Radar beinhaltet.

14. Verfahren nach Anspruch 12 oder 13, wobei das Fahrzeug (110) ein Luftfahrzeug ist und sich die Mensch-Maschine-Schnittstellenkomponente (4) und das 3-dimensionale Erfassungssystem (102) in einem Cockpit des Luftfahrzeugs befinden.

## Revendications

1. Système de numérisation de composants d'un véhicule (110), le système comprenant :
un système de détection tridimensionnelle (102) agencé de manière fonctionnelle pour surveiller un composant d'interface homme-machine (4) incluant un composant apte à être enclenché par opérateur du véhicule, le composant apte à être enclenché par opérateur permettant de commander un dispositif commandé (2) du véhicule, le système de détection tridimensionnelle (102) incluant au moins un dispositif de détection à distance (16) apte à détecter une position ou un statut du composant d'interface homme-machine (4) ; et
un contrôleur (104) agencé pour recevoir des données détectées à partir du système de détection tridimensionnelle (102) ;
dans lequel le contrôleur (104) traite les données détectées pour attribuer une valeur numérique qui est utilisée pour reconnaître la position ou le statut du composant d'interface homme-machine (4) et correspond à un état ordonné du dispositif commandé (2) et délivre en sortie un signal indiquant un état du composant d'interface homme-machine (4), le dispositif commandé (2) étant commandé par l'état du composant d'interface homme-machine (4).

2. Système selon la revendication 1, dans lequel le système de détection tridimensionnelle (102) inclut un dispositif de capture d'image (16) et les données détectées incluent des images détectées.

3. Système selon les revendications 1 ou 2, dans lequel le système de détection tridimensionnelle (102) est agencé de manière fonctionnelle pour surveiller une pluralité de composants d'interface homme-machine (4).

4. Système selon la revendication 3, dans lequel le système de détection tridimensionnelle (102) inclut une pluralité de dispositifs de détection tridimensionnelle (16), chaque dispositif de détection tridimensionnelle (16) étant agencé de manière fonctionnelle pour surveiller une pluralité de composants d'interface homme-machine (4).

5. Système selon la revendication 4, dans lequel au moins un sous-ensemble de la pluralité de composants d'interface homme-machine (4) sont surveillés par deux dispositifs ou plus de la pluralité de dispositifs de détection tridimensionnelle (16).

6. Système selon l'une quelconque des revendications précédentes, dans lequel le système de détection tridimensionnelle (102) inclut l'un d'un système lidar, d'une caméra 3D et d'un radar.

7. Système selon l'une quelconque des revendications précédentes, dans lequel le véhicule (110) est un aéronef et le composant d'interface homme-machine (4) et le système de détection tridimensionnelle (102) sont situés dans un cockpit de l'aéronef.

8. Système selon l'une quelconque des revendications précédentes, dans lequel le composant d'interface homme-machine (4) est au moins l'un d'un levier de pas collectif, d'un manche de pas cyclique et d'une manette des gaz.

9. Système selon l'une quelconque des revendications précédentes, dans lequel le composant d'interface homme-machine (4) est situé sur un tableau d'instruments de l'aéronef.

10. Système selon l'une quelconque des revendications précédentes, comprenant en outre un actionneur (6) pour actionner le dispositif commandé (2), dans lequel l'actionneur est apte à être actionné en réponse au signal du contrôleur (104).

11. Système selon la revendication 10, comprenant en outre une commande de supervision (25), dans lequel la commande de supervision est agencée pour recevoir le signal du contrôleur (104) et agencée pour ordonner l'actionnement du dispositif commandé (2) à travers l'actionneur (6).

12. Procédé de numérisation de composants d'un véhicule (110), le procédé comprenant :
l'agencement d'un système de détection tridimensionnelle (102) pour surveiller un composant d'interface homme-machine (4) incluant un composant apte à être enclenché par opérateur du véhicule, le composant apte à être enclenché par opérateur permettant de commander un dispositif commandé (2) du véhicule, le système de détection tridimensionnelle (102) incluant au moins un dispositif de détection à distance (16) apte à détecter une position ou un statut du composant d'interface homme-machine (4) ;
l'envoi de données détectées représentatives d'une zone incluant le composant d'interface homme-machine (4) du système de détection tridimensionnelle (102) à un contrôleur (104) ;
le traitement des données détectées dans le contrôleur (104) pour attribuer une valeur numérique qui est utilisée pour reconnaître la position ou le statut du composant d'interface homme-machine (4) et correspond à un état ordonné du dispositif commandé (2) ;
la sortie d'un signal indicatif d'un état du composant d'interface homme-machine (4) ; et
l'actionnement du dispositif commandé (2) en réponse au signal du contrôleur (104).

13. Procédé selon la revendication 12, dans lequel le système de détection tridimensionnelle (102) inclut au moins l'un d'un système lidar, d'une caméra 3D et d'un radar.

14. Procédé selon la revendication 12 ou 13, dans lequel le véhicule (110) est un aéronef et le composant d'interface homme-machine (4) et le système de détection tridimensionnelle (102) sont situés dans un cockpit de l'aéronef.
